# FASCICULE DE BREVET EUROPEEN

(11) **EP 2 036 788 B1**
(45) Date de publication et mention de la délivrance du brevet: **15.09.2010**
(21) Numéro de dépôt: 08300230.3
(22) Date de dépôt: 26.06.2008
(51) Int. Cl.: B60R 22/195, B60R 22/46

(54) **Elément de fixation d'un dispositif de ceinture de sécurité d'un véhicule**
Befestigungsvorrichtung einer Sicherheitsgurtvorrichtung eines Fahrzeugs
Element for attaching a vehicle seatbelt device

(30) Priorité: 12.09.2007 FR 0706380
(43) Date de publication de la demande: 18.03.2009
(73) Titulaire: Renault S.A.S., 92100 Boulogne-Billancourt (FR)
(72) Inventeur: Douceau, Daniel, 78890 Garancières (FR); Meslin, Guy, 28130 Pierres (FR)

(56) Documents cités:
- EP-A- 1 266 808
- EP-A- 1 749 712
- DE-B3- 10 335 631
- GB-A- 2 337 029
- US-A- 5 863 009
- US-A1- 2007 029 774

## Description

La présente invention concerne un élément de fixation d'un dispositif de ceinture de sécurité de véhicule automobile, en particulier un élément de fixation d'un dispositif pyrotechnique prétensionneur de ceinture de sécurité.

Il est connu d'utiliser dans les véhicules automobiles des prétensionneurs de ceinture de sécurité permettant de tendre les ceintures de sécurité des occupants du véhicule au tout début d'un choc de manière à améliorer l'efficacité de celles-ci. Un prétensionneur est en général disposé à proximité d'un point d'ancrage de la ceinture, entre l'ancrage et la ceinture. La structure de certains prétensionneurs fait qu'il n'est plus possible d'ancrer simplement la ceinture sur une pièce de structure du châssis du véhicule ou sur une pièce de structure de siège grâce à un palier de manière à ce que quelle que soit la direction de l'effort de tension de ceinture, il n'existe pas de couple mécanique créé par l'action de la ceinture sur l'ancrage.

En effet, certaines structures de prétensionneur sont telles que, pendant l'activation du prétensionneur, la direction d'application de l'effort de la ceinture sur la pièce d'ancrage de ceinture se déplace par rapport à l'axe de fixation de la pièce d'ancrage de ceinture sur la pièce de structure. Ainsi, l'action de la ceinture sur la pièce d'ancrage va tendre à faire tourner la pièce d'ancrage autour de l'axe de fixation.

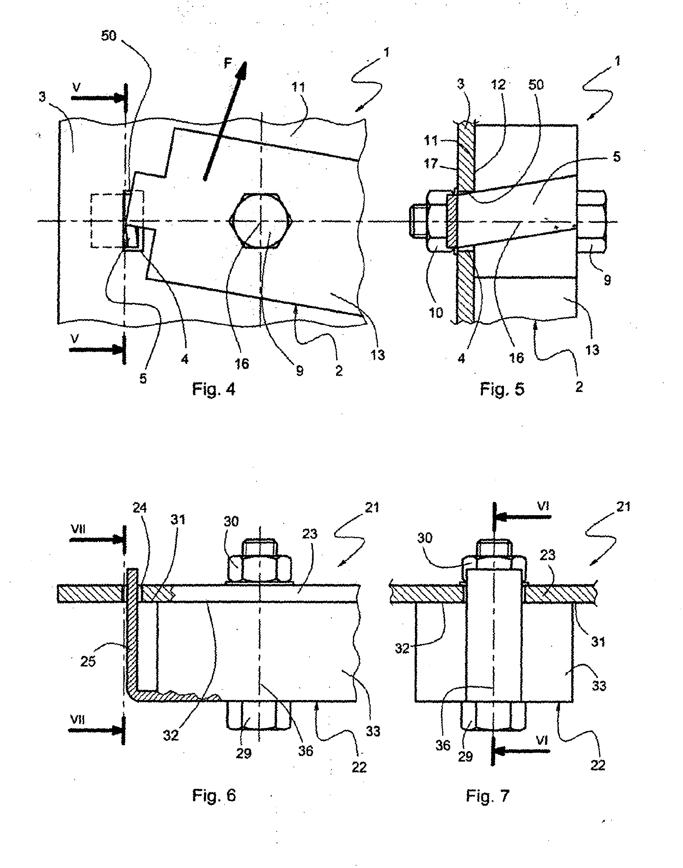

Pour remédier à ce phénomène, il est connu d'utiliser un agencement 21 décrit ci-après en référence aux figures 6 et 7. Dans cet agencement, un élément de fixation 22 de dispositif pyrotechnique de prétensionneur est fixé sur une interface 23 prévue, par exemple sur la structure d'un siège, pour le recevoir. L'élément de fixation comprend une face 32 qui est plaquée contre une face 31 de l'interface grâce à l'action d'un boulon comprenant une vis 29 et un écrou 30. II est en outre prévu, sur l'élément de fixation 22, une patte 25 coopérant avec une lumière 24 prévue dans l'interface 23, l'extrémité de la patte traversant la lumière. Cette patte et cette lumière coopèrent ainsi pour interdire la rotation de l'élément de fixation relativement à l'interface autour de l'axe 36 de la liaison par vis. Cette patte sert donc en cas d'effort violent qui serait appliqué sur l'élément de fixation et dont la direction ne serait pas exactement alignée avec l'axe 36.

On a remarqué qu'une telle patte n'était pas toujours suffisante pour assurer cette interdiction de mouvement de rotation et que dans certains cas celle-ci était susceptible, sous l'effet des actions mécaniques, de se déformer d'une manière telle qu'elle puisse sortir de la lumière. En outre, il n'est pas toujours possible et/ou souhaitable de donner à cette patte des dimensions plus importantes pour éviter ces déformations et sa sortie de la lumière.

Le but de l'invention est de fournir un élément de fixation obviant aux inconvénients identifiés précédemment et améliorant les éléments de fixation connus de l'art antérieur. En particulier, l'invention propose un élément de fixation de structure simple permettant d'assurer de manière efficace la fonction de la patte même sous l'effet d'efforts de tension de ceinture de sécurité importants.

Selon l'invention, l'élément de fixation d'un dispositif de ceinture de sécurité de véhicule automobile, comprend un moyen pour plaquer une première face de l'élément contre une deuxième face d'une interface sur laquelle l'élément est destiné à être monté et une patte s'étendant selon une première direction au moins sensiblement perpendiculaire à la première face et dimensionnée de manière à s'engager dans une lumière pratiquée dans l'interface. Il est caractérisé en ce que la patte comprend, à son extrémité libre, une extension s'étendant selon une deuxième direction au moins sensiblement perpendiculaire à la première face.

La patte peut être constituée par une tôle rapportée.

L'extension peut être réalisée par pliage de la patte.

Le moyen pour plaquer la première face de l'élément contre la deuxième face d'une interface peut comprendre une vis se vissant dans un écrou.

La patte peut présenter une section rectangulaire.

Selon l'invention, un dispositif de prétensionneur de ceinture de sécurité comprend un élément de fixation défini précédemment.

Selon l'invention, un agencement comprend un élément de fixation défini précédemment ou un dispositif défini précédemment et monté sur un élément de structure de siège de véhicule ou sur un élément de structure de caisse de véhicule automobile.

Selon l'invention, un véhicule automobile comprend un élément de fixation défini précédemment ou un dispositif défini précédemment ou un agencement défini précédemment.

Le dessin annexé représente, à titre d'exemples, un élément de fixation connu de l'art antérieur et un mode de réalisation d'un élément de fixation selon l'invention.
La figure 1 est une vue de face d'un mode de réalisation d'un élément de fixation selon l'invention.
La figure 2 est une vue en coupe longitudinale partielle, selon le plan II-II, de ce mode de réalisation.
La figure 3 est une vue en coupe transversale partielle, selon le plan III-III, de ce mode de réalisation.
La figure 4 est une vue de face de ce mode de réalisation, l'élément ayant tourné par rapport à sa position initiale.
La figure 5 est une vue en coupe transversale partielle, selon le plan V-V, de ce mode de réalisation, l'élément ayant tourné par rapport à sa position initiale.
La figure 6 est une vue en coupe longitudinale partielle, selon le plan VI-VI, d'un élément de fixation connu de l'art antérieur.
La figure 7 est une vue en coupe transversale partielle, selon le plan VII-VII, d'un élément de fixation connu de l'art antérieur.

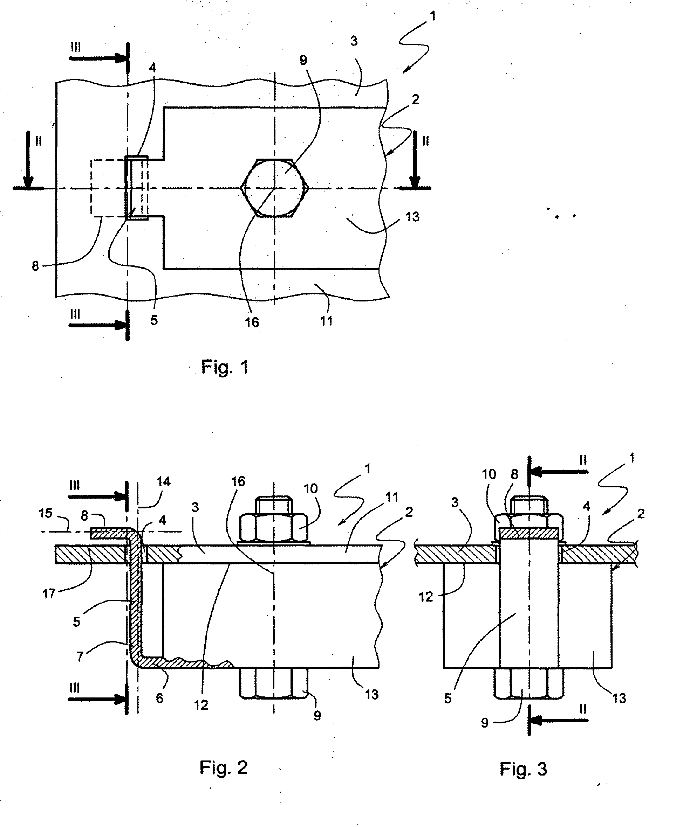

L'agencement 1, représenté aux figures 1 à 3 comprend un dispositif 2 de prétensionneur de ceinture de sécurité de véhicule automobile fixé sur une interface 3 de fixation prévue par exemple sur la structure d'un siège de véhicule automobile ou sur la structure d'une caisse de véhicule automobile. Cette interface est par exemple une tôle.

Pour assurer cette fixation, le dispositif 2 de prétensionneur de ceinture de sécurité comprend un élément de fixation 13 ayant par exemple la forme d'un boîtier et comprenant une première face 12. Cette première face est destinée à être appliquée contre une deuxième face 11 prévue sur l'interface 3.

L'élément de fixation présente un moyen pour plaquer et maintenir en pression ces première et deuxième faces l'une contre l'autre. Ce moyen comprend par exemple une vis 9 traversant l'élément de fixation et l'interface et coopérant avec un écrou 10. Pour ce faire, des perçages d'axe 16 sont prévus dans l'élément de fixation et dans l'interface 3. La pression exercée entre l'élément de fixation et l'interface combinée au frottement de ces pièces l'une sur l'autre permet d'immobiliser les pièces l'une par rapport à l'autre au moins tant que les efforts appliqués sur l'élément de fixation ne dépassent pas un certain niveau.

Pour éviter et limiter les déplacements relatifs des deux pièces lorsque des efforts plus importants sont appliqués à l'élément de fixation, il est prévu sur cet élément de fixation un moyen de blocage de sa rotation relativement à l'interface.

Ce moyen comprend une patte 5 comprenant une première partie 7 s'étendant selon une direction 14 de préférence perpendiculaire à la première face 12 et traversant une lumière 4 prévue dans l'interface 3. L'extrémité de cette patte comprend une deuxième partie 8. Cette deuxième partie 8 s'étend selon une deuxième direction 15 par exemple parallèle à la première face ou, de préférence, parallèle à une troisième face 17 située en arrière de l'interface au voisinage de la lumière 4. Cette deuxième partie 8 est de préférence réalisée par simple pliage de l'extrémité libre de la patte de sorte que la deuxième partie forme au moins sensiblement un angle droit avec la première partie.

La patte 5 peut être réalisée par une tôle, par exemple une tôle d'acier, rapportée sur l'ensemble des autres composants avec lesquels elle forme l'élément de fixation. Les sections de la patte et de la lumière sont de préférence rectangulaires.

Sur les figures 4 et 5, l'agencement selon l'invention est représenté alors qu'un effort important F est appliqué sur l'élément de fixation, cet effort étant en outre non aligné avec l'axe 16 de la liaison par vis. Cet effort crée un couple tendant à faire tourner l'élément de fixation dans le sens horaire jusqu'à l'amener dans la position représentée, la limite de résistance au couple de la liaison vissée ayant été dépassée.

Au cours de ce déplacement de rotation, la patte 5 vient en contact avec le bord 50 de la lumière 4 et se déforme comme représenté aux figures 4 et 5. Cette déformation a notamment comme conséquence de plaquer la deuxième partie 8 de la patte contre la face 17 de l'interface. Une fois en contact sur cette face, la patte 5 est bloquée et ne peut pas s'échapper de la lumière. Dès lors, la seule possibilité pour que la rotation de l'élément de fixation puisse se poursuivre dans le sens horaire serait que la patte 5 se rompe, ce qui nécessiterait des efforts considérables.

Ainsi, grâce à des moyens simples, il est possible d'améliorer sensiblement la fonction anti-rotation de la patte de l'élément de fixation.

Bien entendu, par rapport à la solution connue de l'art antérieur, pour une même section de patte, la lumière du mode de réalisation selon l'invention présente des dimensions plus importantes afin de permettre le passage de la patte et en particulier le passage de la zone pliée entre les première et deuxième partie de patte, la patte devant être glissée dans la lumière lors du montage, en effectuant des mouvement combinés de translation et rotation de l'élément de fixation par rapport à l'interface.

Un tel élément de fixation peut également être utilisé pour la fixation de tout dispositif sur une structure dans dos cas où il est nécessaire de limiter de façon économique les possibilités de rotation du dispositif relativement à la structure.

## Revendications

1. Elément (13) de fixation d'un dispositif de ceinture de sécurité de véhicule automobile, comprenant un moyen (9, 10) pour plaquer une première face (12) de l'élément contre une deuxième face (11) d'une interface (3) sur laquelle l'élément est destiné à être monté et une patte (5) s'étendant selon une première direction (14) au moins sensiblement perpendiculaire à la première face et dimensionnée de manière à s'engager dans une lumière (4) pratiquée dans l'interface, **caractérisé en ce que** la patte comprend, à son extrémité libre, une extension (8) s'étendant selon une deuxième direction (15) au moins sensiblement perpendiculaire à la première face.

2. Elément de fixation selon la revendication précédente, **caractérisé en ce que** la patte est constituée par une tôle rapportée.

3. Elément de fixation selon l'une des revendications précédentes, **caractérisé en ce que** l'extension est réalisée par pliage de la patte.

4. Elément de fixation selon l'une des revendications précédentes, **caractérisé en ce que** le moyen pour plaquer la première face de l'élément contre la deuxième face d'une interface comprend une vis (9) se vissant dans un écrou (10).

5. Elément de fixation selon l'une des revendications précédentes, **caractérisé en ce que** la patte présente une section rectangulaire.

6. Dispositif (2) de prétensionneur de ceinture de sécurité comprenant un élément de fixation (13) selon l'une des revendications précédentes.

7. Agencement (1) comprenant un élément de fixation (13) selon l'une des revendications 1 à 5 ou un dispositif (2) selon la revendication 6 monté sur un élément (3) de structure de siège de véhicule ou sur un élément de structure de caisse de véhicule automobile.

8. Véhicule automobile comprenant un élément de fixation (13) selon l'une des revendications 1 à 5 ou un dispositif (2) selon la revendication 6 ou un agencement (1) selon la revendication 7.

## Claims

1. Element (13) for securing a motor vehicle seat belt device, comprising a means (9, 10) for pressing a first face (12) of the element against a second face (11) of an interface (3) on which the element is intended to be mounted and a tab (5) extending in a first direction (14) at least approximately perpendicular to the first face and designed to engage in a slot (4) made in the interface, **characterized in that** the tab comprises, at its free end, an extension (8) extending in a second direction (15) at least approximately perpendicular to the first face.

2. Securing element according to the preceding claim, **characterized in that** the tab consists of an inserted metal sheet.

3. Securing element according to either of the preceding claims, **characterized in that** the extension is produced by folding the tab.

4. Securing element according to one of the preceding claims, **characterized in that** the means for pressing the first face of the element against the second face of an interface comprises a screw (9) screwed into a nut (10).

5. Securing element according to one of the preceding claims, **characterized in that** the tab has a rectangular cross section.

6. Seat belt pretensioner device (2) comprising a securing element (13) according to one of the preceding claims.

7. Arrangement (1) comprising a securing element (13) according to one of Claims 1 to 5 or a device (2) according to Claim 6 mounted on a vehicle seat structural element (3) or on a motor vehicle body structural element.

8. Motor vehicle comprising a securing element (13) according to one of Claims 1 to 5 or a device (2) according to Claim 6 or an arrangement (1) according to Claim 7.

## Patentansprüche

1. Element (13) zum Befestigen einer Kraftfahrzeug-Sicherheitsgurtvorrichtung, mit einem Mittel (9, 10), um eine erste Fläche (12) des Elements gegen eine zweite Fläche (11) einer Grenzfläche (3) zu drücken, auf der das Element montiert werden soll, und einer Lasche (5), die sich in einer ersten Richtung (14) wenigstens im Wesentlichen senkrecht zu der ersten Fläche erstreckt und so bemessen ist, dass sie in einem in der Grenzfläche ausgebildeten Langloch (4) in Eingriff gelangen kann, **dadurch gekennzeichnet, dass** die Lasche an ihrem freien Ende eine Verlängerung (8) aufweist, die sich in einer zweiten Richtung (15) wenigstens im Wesentlichen senkrecht zu der ersten Fläche erstreckt.

2. Befestigungselement nach dem vorhergehenden Anspruch, **dadurch gekennzeichnet, dass** die Lasche durch ein angestücktes Blech gebildet ist.

3. Befestigungselement nach einem der vorhergehenden Ansprüche, **dadurch gekennzeichnet, dass** die Verlängerung durch Biegen der Lasche verwirklicht ist.

4. Befestigungselement nach einem der vorhergehenden Ansprüche, **dadurch gekennzeichnet, dass** das Mittel zum Drücken der ersten Fläche des Elements gegen die zweite Fläche einer Grenzfläche eine Schraube (9) aufweist, die in eine Mutter (10) geschraubt wird.

5. Befestigungselement nach einem der vorhergehenden Ansprüche, **dadurch gekennzeichnet, dass** die Lasche einen rechtwinkligen Querschnitt besitzt.

6. Gurtstraffer-Auslösevorrichtung (2), die ein Befestigungselement (13) nach einem der vorhergehenden Ansprüche enthält.

7. Anordnung (1), die ein Befestigungselement (13) nach einem der Ansprüche 1 bis 5 oder eine Vorrichtung (2) nach Anspruch 6 enthält, die an einem Strukturelement (3) eines Fahrzeugsitzes oder an einem Strukturelement einer Kraftfahrzeugkarosserie montiert ist.

8. Kraftfahrzeug, das ein Befestigungselement (13) nach einem der Ansprüche 1 bis 5 oder eine Vorrichtung (2) nach Anspruch 6 oder eine Anordnung (1) nach Anspruch 7 enthält.
